(19) Europäisches Patentamt
European Patent Office
Office européen des brevets

(11) **EP 4 474 343 A1**

(12) **EUROPEAN PATENT APPLICATION**
published in accordance with Art. 153(4) EPC

(43) Date of publication:
**11.12.2024 Bulletin 2024/50**

(21) Application number: 23766719.1

(22) Date of filing: **03.03.2023**

(51) International Patent Classification (IPC):
**C01B 3/26** (2006.01)  **C01B 32/05** (2017.01)
**B01J 23/745** (2006.01)

(52) Cooperative Patent Classification (CPC):
**B01J 23/745; C01B 3/26; C01B 32/05**

(86) International application number:
**PCT/JP2023/007941**

(87) International publication number:
**WO 2023/171543 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.03.2022 JP 2022037899**

(71) Applicant: **Mitsubishi Heavy Industries, Ltd.
Tokyo 100-8332 (JP)**

(72) Inventors:
• **TANAKA, Yukio**
  **Tokyo 100-8332 (JP)**
• **KIYOSAWA, Masashi**
  **Tokyo 100-8332 (JP)**
• **YASUTAKE, Toshinobu**
  **Tokyo 100-8332 (JP)**
• **KUBOTA, Takafumi**
  **Tokyo 100-8332 (JP)**
• **TANAKA, Atsushi**
  **Tokyo 100-8332 (JP)**

(74) Representative: **Studio Torta S.p.A.
Via Viotti, 9
10121 Torino (IT)**

(54) **DIRECT CRACKING METHOD FOR HYDROCARBONS**

(57)     A direct cracking method of a hydrocarbon for directly cracking a hydrocarbon into carbon and hydrogen in each of a first reactor and a second reactor includes: a step of continuously flowing a catalyst containing iron as a catalyst component through the first reactor and then flowing the catalyst through the second reactor; and a step of continuously flowing a feedstock gas containing a hydrocarbon through one of the first reactor or the second reactor and then flowing the feedstock gas through the other of the first reactor or the second reactor, in which the feedstock gas and the catalyst come into contact with each other in each of the first reactor and the second reactor under a condition that a pressure in the second reactor is higher than a pressure in the first reactor.

FIG. 1

## Description

Technical Field

The present disclosure relates to a direct cracking method of a hydrocarbon.

The present application claims priority based on the Japanese Patent Application No. 2022-037899, filed with the Japan Patent Office on March 11, 2022, the content of which is incorporated herein by reference.

Background Art

Currently, production of various types of energy largely depends on fossil fuels such as petroleum, coal, and natural gas, and from the viewpoint of global environmental conservation and the like, an increase in amount of carbon dioxide emitted by combustion of fossil fuels is regarded as an issue. Reached by agreement in 2015, the Paris Agreement requires reducing the emission amount of carbon dioxide to deal with the climate change issue, and in thermal power plants and the like, reduction of the carbon dioxide emission amount due to combustion of fossil fuels is an important issue. While a process for separating and recovering the emitted carbon dioxide has been energetically studied, a technique to produce energy without emitting carbon dioxide by using an alternative fuel to fossil fuel has also been studied.

Thus, hydrogen, which is a clean fuel that does not emit carbon dioxide through combustion, has attracted attention as an alternative to fossil fuel. Hydrogen can be produced, for example, by steam reforming methane contained in natural gas. However, in this production method, carbon monoxide is generated as a by-product, and the carbon monoxide is finally oxidized and discharged as carbon dioxide. As a method for producing hydrogen from water without using fossil fuel, a water electrolysis method, photocatalytic method, and the like have been studied; however, these methods require a large amount of energy and are economically problematic.

Meanwhile, a method for producing hydrogen and carbon by directly cracking methane has been developed. The direct cracking of methane is characterized in that hydrogen fuel can be obtained without emitting carbon dioxide, and while carbon as a by-product is solid and thus can be easily immobilized, carbon itself can be effectively used in a wide range of applications such as electrode materials, tire materials, and civil engineering applications. Patent Document 1 describes a method for producing hydrogen and carbon by directly cracking a hydrocarbon in the coexistence of at least one of hydrogen or carbon dioxide using a supported catalyst in which iron as a catalyst component is supported on a carrier.

Patent Document 1 discloses a result that the activity of a reaction for directly cracking a hydrocarbon into carbon and hydrogen sharply drops within one hour, and the maintenance of the activity of this reaction has been an issue. On the other hand, according to the research of the inventors of the present disclosure, it has been clarified that the activity of the direct cracking reaction of a hydrocarbon can be maintained for a long time when an unsupported catalyst of an aggregate of a plurality of metallic particles containing iron is used (Japanese Patent Application No. 2021-153622, filed by the applicant of the present application).

Citation List

Patent Literature

Patent Literature 1: JP 4697941 BI

Summary of Invention

Technical Problem

However, while in the studies of the inventors of the present disclosure, it has been clarified that the activity of the direct cracking reaction of a hydrocarbon can be maintained for a long time when the unsupported catalyst of the aggregate of the plurality of metallic particles containing iron is used, directly cracking a hydrocarbon at a suitable cost using this catalyst still remains as an issue. Note that this is not an issue unique to the above-described unsupported catalyst and is also applicable to the case of directly cracking a hydrocarbon using a supported catalyst in which iron as a catalyst component is supported on a carrier.

In view of the above circumstances, it is an object of at least one embodiment of the present disclosure to provide a direct cracking method of a hydrocarbon that can directly crack a hydrocarbon at a suitable cost.

Solution to Problem

In order to achieve the above object, a direct cracking method of a hydrocarbon according to the present disclosure is a direct cracking method of a hydrocarbon for directly cracking a hydrocarbon into carbon and hydrogen in each of a first reactor and a second reactor, and includes: a step of continuously flowing a catalyst containing iron as a catalyst component through the first reactor and then flowing the catalyst through the second reactor; and a step of continuously flowing a feedstock gas containing a hydrocarbon through one of the first reactor or the second reactor and then flowing the feedstock gas through the other of the first reactor or the second reactor, in which the feedstock gas and the catalyst come into contact with each other in each of the first reactor and the second reactor under a condition that a pressure in the second reactor is higher than a pressure in the first reactor.

Advantageous Effects of Invention

According to the direct cracking method of a hydrocarbon of the present disclosure, where a catalyst is pretreated in a first reactor, and then a hydrocarbon is directly cracked in a second reactor having an internal pressure higher than the internal pressure of the first reactor, a total volume of the first reactor and the second reactor can be reduced as compared with a case where pretreating a catalyst and directly cracking a hydrocarbon are performed in one reactor, and thus the hydrocarbon can be directly cracked at a suitable cost.

Brief Description of Drawings

FIG. 1 is a configuration schematic diagram of a device for performing a direct cracking method of a hydrocarbon according to Embodiment 1 of the present disclosure.
FIG. 2 is a configuration schematic diagram of an experimental apparatus for conducting an experiment for examining the effects of the direct cracking method of a hydrocarbon according to Embodiment 1 of the present disclosure.
FIG. 3 is a graph indicating a change with time in methane conversion rate obtained in the experiment for examining the effects of the direct cracking method of a hydrocarbon according to Embodiment 1 of the present disclosure.
FIG. 4 is a diagram indicating a mass balance in configuration 1, which is a model for examining the effects of the direct cracking method of a hydrocarbon according to Embodiment 1 of the present disclosure.
FIG. 5 is a diagram indicating a mass balance in configuration 2, which is the model for examining the effects of the direct cracking method of a hydrocarbon according to Embodiment 1 of the present disclosure.
FIG. 6 is a configuration schematic diagram of a device for performing a direct cracking method of a hydrocarbon according to Embodiment 2 of the present disclosure.

Description of Embodiments

Hereinafter, a direct cracking method of a hydrocarbon according to embodiments of the present disclosure will be described with reference to the drawings. The embodiments to be described below illustrate one aspect of the present disclosure, do not limit the present disclosure, and can be appropriately changed within the scope of the technical idea of the present disclosure.

First Embodiment

<Configuration of device for performing direct cracking method of hydrocarbon according to Embodiment 1 of the present disclosure>

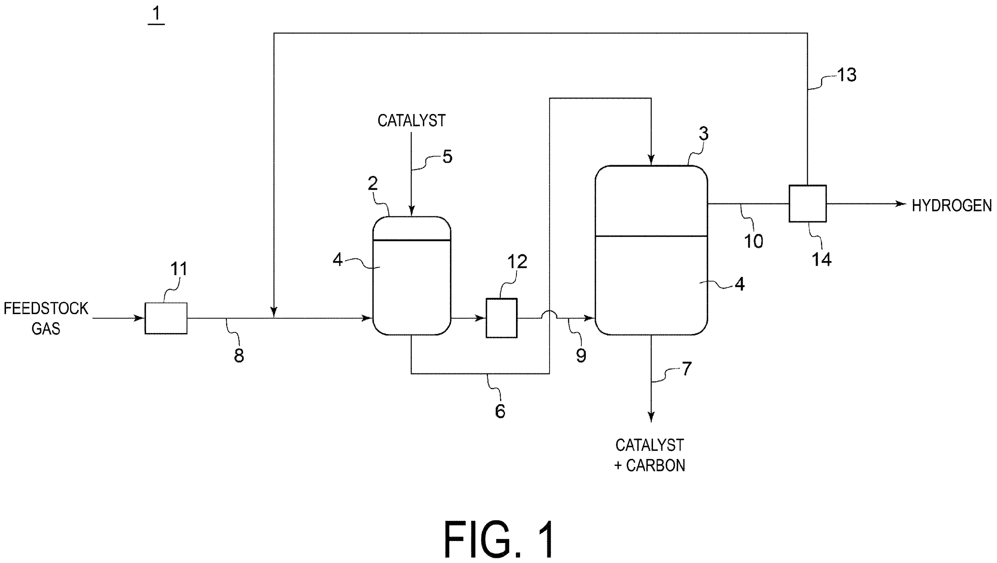

FIG. 1 illustrates a configuration of a device 1 for performing a direct cracking method of a hydrocarbon according to Embodiment 1 of the present disclosure. The device 1 includes a first reactor 2 and a second reactor 3. The device 1 is configured to continuously flow a catalyst 4 having a configuration described later through the first reactor 2 and then through the second reactor 3. In order to achieve such a configuration, for example, a catalyst supply line 5 for supplying the catalyst 4 to the first reactor 2, a catalyst transfer line 6 for supplying the catalyst 4 flowing out of the first reactor 2 to the second reactor 3, and a catalyst outflow line 7 for allowing the catalyst 4 to flow out of the second reactor 3 are provided, and these may be configured by, for example, a sealed belt conveyor or a screw feeder.
The device 1 further includes a gas supply line 8 that supplies a feedstock gas containing hydrocarbons, such as natural gas or gas obtained by purifying natural gas or the like, to the first reactor 2, a gas transfer line 9 that supplies the feedstock gas flowing out of the first reactor 2 to the second reactor 3, and a gas outflow line 10 through which the outflow gas flowing out of the second reactor 3 flows. Compressors 11 and 12 for pressurizing the feedstock gas are provided in the gas supply line 8 and the gas transfer line 9, respectively.

Although not an essential configuration, the device 1 may include a gas recycle line 13 which branches off from the gas outflow line 10 and is connected to the gas supply line 8. The device 1 including the gas recycle line 13 may be provided with a gas separator 14 that separates the outflow gas into a hydrocarbon-rich gas and a hydrogen-rich gas at a branching point where the gas recycle line 13 branches from the gas outflow line 10. The configuration of the gas separator 14 is not particularly limited, and may be, for example, a membrane separator or the like.

The catalyst 4 includes a plurality of iron particles. That is, the catalyst 4 is not a supported catalyst in which iron is supported on a carrier, but is an unsupported catalyst of an aggregate of iron particles. Each particle of the catalyst 4 is not limited to being formed only of iron, and components (inevitable impurities) inevitably mixed into iron and metal elements other than iron are allowed to be mixed to a certain extent. Thus, in the present application, "made of iron" means made of metal in which the purity of iron is in a range of 100% from the lower limit value.

In the Japanese Patent No. 7089235 issued to the applicant of the present disclosure, it has been clarified that the activity of a reaction for directly cracking a hydrocarbon into carbon and hydrogen (hereinafter, this reaction is referred to as a "direct cracking reaction") can be maintained for a long time by bringing a feedstock gas containing a hydrocarbon into contact with an unsupported catalyst which is an aggregate of a plurality of metallic particles having an iron purity of 86% or more. Accordingly, also in the present disclosure, the "lower limit" of the purity of iron described above is set to 86%.

<Direct cracking method of hydrocarbon according to Embodiment 1 of the present disclosure>

In the device 1, the catalyst 4 is continuously supplied to the first reactor 2 via the catalyst supply line 5. The catalyst 4 flowing into the first reactor 2 stays in the first reactor 2 for a previously designed residence time, and then sequentially flows out of the first reactor 2. The catalyst 4 flowing out of the first reactor 2 continuously flows into the second reactor 3 via the catalyst transfer line 6. The catalyst 4 flowing into the second reactor 3 also stays in the second reactor 3 for a previously designed residence time, and then sequentially flows out of the second reactor 3 via the catalyst outflow line 7.

In the device 1, the feedstock gas is continuously supplied to the first reactor 2 via the gas supply line 8. The feedstock gas flowing into the first reactor 2 stays in the first reactor 2 for a previously designed residence time, and then sequentially flows out of the first reactor 2. The feedstock gas flowing out of the first reactor 2 continuously flows into the second reactor 3 via the gas transfer line 9. The feedstock gas flowing into the second reactor 3 also stays in the second reactor 3 for a previously designed residence time, and then sequentially flows out of the second reactor 3 via the gas outflow line 10.

When the feedstock gas and the catalyst 4 are brought into contact with each other in each of the first reactor 2 and the second reactor 3, the hydrocarbon in the feedstock gas is directly cracked into hydrogen and carbon. In this direct cracking reaction, when methane is taken as an example of the hydrocarbon, a reaction represented by the following reaction formula (1) occurs in each of the first reactor 2 and the second reactor 3.

$$CH_4 \rightarrow 2H_2 + C \ ... \qquad (1)$$

As disclosed in the prior application of the applicant of the present application, when the above-described unsupported catalyst is used as the catalyst 4, although the activity of the direct cracking reaction of a hydrocarbon is maintained for a long time, it takes about 5 to 10 hours for the activity of the direct cracking reaction to sufficiently increase. Thus, the first reactor 2 is used mainly for pretreating the catalyst 4, and the second reactor 3 is used mainly for directly cracking a hydrocarbon. In the pretreatment in the first reactor 2, the hydrocarbon in the feedstock gas is directly cracked into hydrogen and carbon, and the iron of the catalyst 4 is divided into iron fine particles of submicron order by hydrogen erosion by the produced hydrogen, and highly dispersed in the produced carbon, so that the activity of the catalyst 4 increases. In this process, since a part of the hydrocarbon in the feedstock gas is directly cracked into hydrogen and carbon, the feedstock gas flowing out of the first reactor 2 contains hydrogen, and carbon is attached to the catalyst 4 flowing out of the first reactor 2.

Since the catalyst 4 flowing out of the first reactor 2 exhibits sufficient activity by the pretreatment of the catalyst 4 in the first reactor 2, the hydrocarbon is directly cracked into hydrogen and carbon with sufficient activity by coming into contact with the hydrocarbon in the second reactor 3. Hydrogen can be obtained by recovering the outflow gas flowing out of the second reactor 3 via the gas outflow line 10 or by purifying the outflow gas depending on the concentration of hydrogen in the outflow gas. Since carbon is attached to the catalyst 4 flowing out of the second reactor 3 via the catalyst outflow line 7, carbon can be recovered by removing the carbon from the catalyst 4 by any method, and the catalyst 4 from which the carbon has been removed may be reused in the device 1.

When the device 1 is provided with the gas recycle line 13, a part of the outflow gas flowing out of the second reactor 3 flows through the gas recycle line 13, merges with the feedstock gas flowing through the gas supply line 8 and flows into the first reactor 2. Since the outflow gas contains unreacted hydrocarbon, a part of the unreacted hydrocarbon is returned to the first reactor 2, thereby obtaining an opportunity to be directly cracked again. This makes it possible to improve a yield of hydrogen. Since hydrogen is also contained in the outflow gas, hydrogen is supplied to the first reactor 2. Since hydrogen is required for the pretreatment of the catalyst 4 in the first reactor 2, the efficiency of the pretreatment can also be improved.

When the device 1 is provided with the gas separator 14, the hydrocarbon contained in the outflow gas can be supplied to the first reactor 2, so that the yield of hydrogen can be improved. In addition, since the hydrocarbon is removed from the outflow gas, the purity of recovered hydrogen can be increased.

In the prior application of the applicant of the present application, it has also been clarified that the activity of the direct cracking reaction can be maintained for a long time by performing the direct cracking reaction in a temperature range of 600°C to 900°C. Thus, also in the direct cracking method of a hydrocarbon of the present disclosure, the temperatures in the first reactor 2 and the second reactor 3 are preferably within the above ranges. Considering that while the pretreatment of the catalyst 4 is mainly performed in the first reactor 2, the direct cracking of a hydrocarbon is mainly performed in the second reactor 3, it is preferable that the conditions in the first reactor 2 and the second reactor 3 are suitable for the respective purposes. Considering the purpose of pretreating the catalyst 4, the temperature in the first reactor 2 is preferably 800°C or lower. Considering the purpose of directly cracking a hydrocarbon, the temperature in the second reactor 3 is preferably 700°C or higher.

<Effects of direct cracking method of hydrocarbon according to Embodiment 1 of the present disclosure>

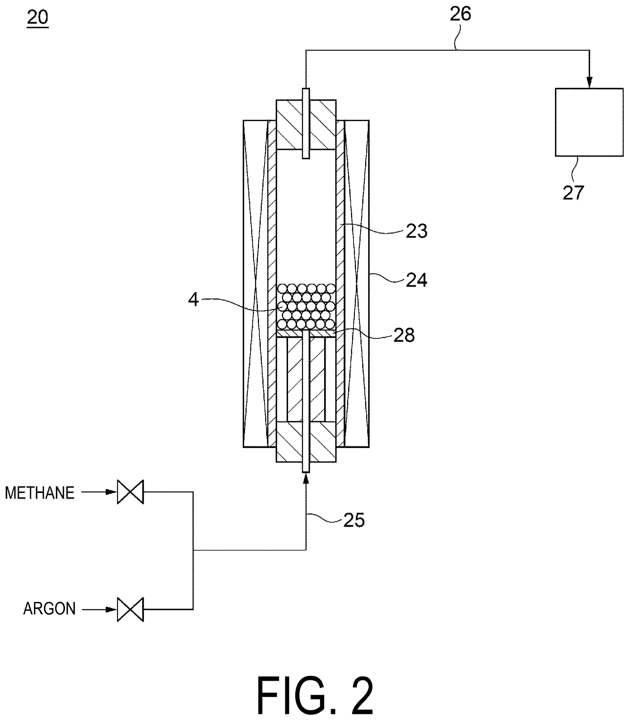

In order to collect basic data necessary for a simulation to examine the effect of the direct cracking method of a hydrocarbon according to Embodiment 1 of the present disclosure, an experiment described below was performed. FIG. 2 illustrates a configuration schematic diagram of an experimental device 20 for performing this experiment.

The experimental device 20 includes a reactor 23 made of quartz having an inner diameter of 16 mm in which a plate 28 on which the above-described catalyst 4 is placed is accommodated. The reactor 23 can be heated by an electric furnace 24. The reactor 23 is connected to a feedstock supply line 25 for supplying each of methane and argon and a reaction gas flow line 26 through which a reaction gas containing a hydrogen generated by a direct cracking reaction of the methane flows after flowing out from the reactor 23. The reaction gas flow line 26 is connected to a gas chromatography 27 for measuring the composition of the reaction gas. An experiment of directly cracking methane as a hydrocarbon into hydrogen and carbon was performed using the experimental device 20. The experimental conditions are summarized in Table 1 below.

[Table 1]

| Reaction temperature [°C] | 800 |
| --- | --- |
| Catalyst amount [cc] | 0.2 |
| Average particle size of catalyst [$\mu$m] | 40 |
| Iron content in catalyst [wt%] | 100 |
| Pressure in reactor [atm] | 1 |
| Flow rate of methane [Ncc/min] | 20 |

After installing the catalyst 4 in the reactor 23, the inside of the reactor 23 was purged with argon. Subsequently, the electric furnace 24 was turned on with argon flowing argon in the reactor 23, and the temperature in the reactor 23 was raised to 800°C. When the temperature in the reactor 23 reached 800°C, the gas supplied to the reactor 23 was switched from argon to methane, and methane gas was flown in the reactor 23. The composition of the reaction gas flowing out of the reactor 23 was periodically measured by a gas chromatography 27.

From the composition of the reaction gas measured by the gas chromatography 27, a methane conversion rate CR [%] and a hydrogen production amount PR [Ncc/min] were calculated by the following formulas (2) and (3). The results are summarized in Table 2 below.

$$CR = C_{Me}/(C_{Me} + C_{H2} \times 0.5) \times 100 \ldots (2)$$

Here, $C_{Me}$ is the concentration [vol%] of methane in the reaction gas, and $C_{H2}$ is the concentration [vol%] of hydrogen in the reaction gas.

$$PR = F_{Me} \times CR/100 \times 2 \ldots (3)$$

Here, $F_{Me}$ is a supply amount of methane [Ncc/min].

[Table 2]

| Elapsed time [hr] | Methane conversion rate [%] | Hydrogen production amount [Ncc/min] |
| --- | --- | --- |
| 0.3 | 0.7 | 0.3 |
| 11.8 | 44.1 | 17.6 |
| 18.1 | 44.3 | 17.7 |
| 30.1 | 25.7 | 10.3 |

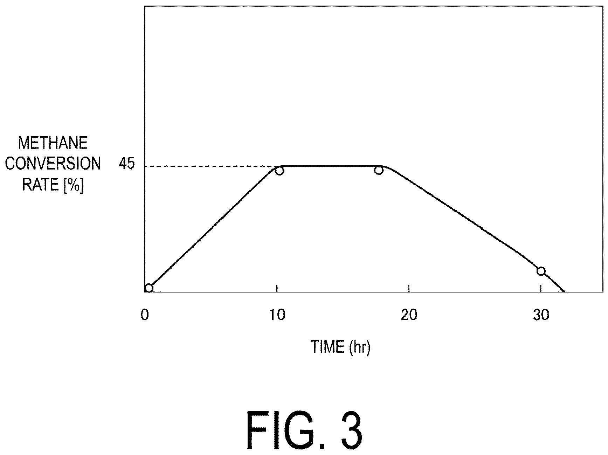

A change with time in methane conversion rate summarized in Table 2 is presented in FIG. 3. Since the methane conversion rate increases up to about 10 hours after the start of the experiment, the increase can be regarded as a process in which the activity of the catalyst 4 increases. Since the methane conversion rate is constant for 10 to 20 hours after the start of the experiment, it can be regarded as a process in which the activity of the catalyst 4 is maintained in a sufficiently high state. After a lapse of 20 hours from the start of the experiment, the methane conversion rate decreases, and thus, it can be considered that the catalyst 4 is in a process of deteriorating. That is, it can be said that the pretreatment of the catalyst 4 is mainly performed up to about 10 hours after the start of the experiment, and the direct cracking reaction of methane is mainly performed after a lapse of 10 hours from the start of the experiment.

In the direct cracking method of a hydrocarbon according to Embodiment 1, the catalyst 4 is pretreated in the first reactor 2, and the hydrocarbon is directly cracked in the second reactor 3 using the pretreated catalyst 4; however, if the reaction conditions in both reactors are changed, the reactions in both reactors can be more efficiently performed. In the following, a comparison of two models is made, that is, a comparison between using one reactor (hereinafter, referred to as "configuration 1") and using two reactors (hereinafter, referred to as "configuration 2"). However, the configuration 2 has different conditions for the respective pressures in the two reactors. The conditions of the reactor in each of the configuration 1 and the configuration 2 are presented in the following Table 3.

[Table 3]

|  |  | Configuration 1 | Configuration 2 |
| --- | --- | --- | --- |
| First reactor | Temperature [°C] | 800 | 800 |
|  | Pressure [kPa] | 101.3 | 101.3 |
| Second reactor | Temperature [°C] | - | 800 |
|  | Pressure [kPa] | - | 301.3 |

In order to compare the configuration 1 and the configuration 2, it is necessary to estimate the methane conversion rate when the pressure is set to 301.3 kPa from the results in Table 2. It is known that a cracking rate r (Me) of methane can be expressed by the following formula (4).

$$r\ (Me) = kP\ (Me) \ \dots \ (4)$$

where k is a rate constant and P (Me) is a partial pressure of methane. Using this formula (4), assuming that the methane conversion rate at a pressure of 1 atm (101.3 kPa) is 45%, the methane conversion rate at a pressure of 301.3 kPa is estimated to be 80%.

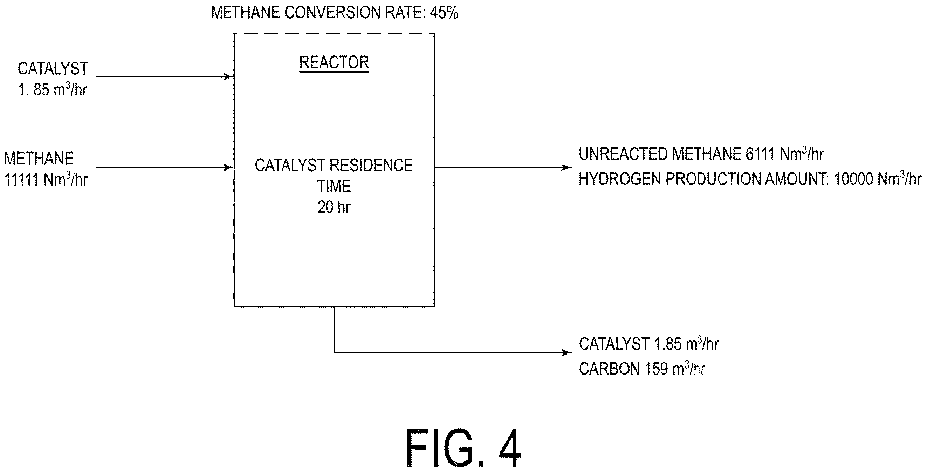

The configuration 1 is a mode in which pretreatment of a catalyst and direct cracking of a hydrocarbon are performed in one reactor. According to Table 2 and FIG. 3, since the pretreatment takes 10 hours and sufficient catalytic activity (methane conversion rate of 45%) is maintained for 10 hours after the pretreatment, the mass balance of the configuration 1 in which the residence time of the catalyst in the reactor is set to 20 hours and the hydrogen production amount in 20 hours is 10000 Nm³/hr is presented in FIG. 4. In the configuration 1, an amount of catalyst supplied to the reactor is 1.85 m³/hr, and an amount of carbon produced is 159 m³/hr. Thus, the volumes of the catalyst and the carbon after 20 hours from the start of the supply of the catalyst and the methane to the reactor are calculated as follows.

$$1.85 \ m^3 + 159 \ m^3 \ / \ hr \times 20 \ hr = 3182 \ m^3$$

Therefore, the reactor requires a volume of at least 3182 m³.

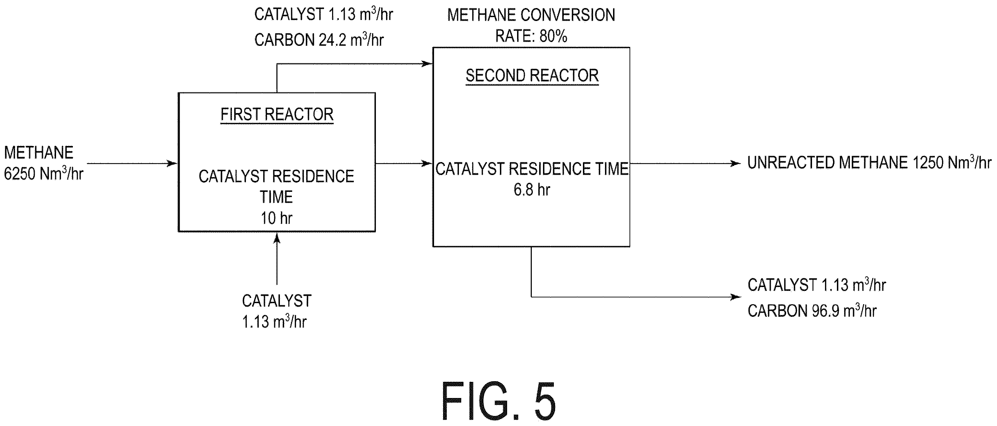

The configuration 2 is a mode in which a catalyst is pretreated in a first reactor, and a hydrocarbon is directly decomposed in a second reactor different from the first reactor. The mass balance of the configuration 2 in which the residence time of the catalyst in the first reactor is set to 10 hours, the methane conversion rate in the second reactor is set to 80%, and the hydrogen production amount is 10000 $Nm^3/hr$ is presented in FIG. 5. In the configuration 2, the amount of catalyst supplied to the first reactor is 1.13 $m^3/hr$, and the amount of carbon produced in the first reactor is 24.2 $m^3/hr$. The residence time of the catalyst in the second reactor is 6.8 hours, and the production amount of carbon in the second reactor is 96.9 $m^3/hr$. Thus, the volumes of the catalyst and the carbon after 10 hours from the start of the supply of the catalyst and the methane to the first reactor are calculated as follows.

$$1.13 \text{ m}^3 + 24.2 \text{ m}^3/\text{hr} \times 10 \text{ hr} = 243 \text{ m}^3$$

Therefore, the first reactor requires a volume of at least 243 $m^3$. The volumes of the catalyst and the carbon in the second reactor at 6.8 hours are calculated as follows.

$$1.13 \text{ m}^3 + 96.9 \text{ m}^3/\text{hr} \times 6.8 \text{ hr} = 660 \text{ m}^3$$

Therefore, the second reactor requires a volume of at least 660 $m^3$.

Comparing the configuration 1 and the configuration 2, in the configuration 1, the reactor requires a volume of at least 3182 $m^3$, and in the configuration 2, both the first reactor and the second reactor together require a volume of at least 903 $m^3$ (243 $m^3$ + 660 $m^3$). Therefore, by directly cracking a hydrocarbon in the second reactor having an internal pressure higher than the internal pressure of the first reactor after pretreating the catalyst in the first reactor, a total volume of the first reactor and the second reactor can be reduced as compared with a case where pretreating the catalyst and directly cracking a hydrocarbon are performed in one reactor, so that the hydrocarbon can be directly cracked at a suitable cost.

Since there is no issue even if the pretreatment of the catalyst is performed under the atmospheric pressure $P_0$ [kPa], the pressure in the first reactor is preferably approximately the atmospheric pressure, that is, $P_0$ [kPa] to ($P_0$ + 50) kPa. On the other hand, since the direct cracking of a hydrocarbon has a higher cracking rate as the pressure is higher, the pressure in the second reactor is higher than at least the pressure in the first reactor, and is preferably 3 MPa or less in consideration of an equilibrium constraint of the methane conversion rate.

An example of a method for determining the pressure in the second reactor in consideration of the equilibrium constraint of the methane conversion rate will be described. Once the temperature and the pressure are determined, an equilibrium conversion rate of methane can be determined. Here, the equilibrium conversion rate of methane means a conversion rate at which the conversion rate is not further improved even if the catalytic activity is improved due to the restriction of a chemical equilibrium of the direct cracking reaction of methane. For example, when the equilibrium conversion rate of methane in a certain temperature range and a certain pressure range is calculated using equilibrium constant data at each temperature described in the catalyst notebook for non-commercial products distributed by Clariant AG (Muttenz, Basel-Landschaft, Switzerland), the following Table 4 is obtained. If a target conversion rate X of methane in the second reactor is determined, an equilibrium conversion rate Y of methane at a certain temperature and a certain pressure is obtained from Table 4, and the pressure in the second reactor can be determined under the condition of $X \leq Y$. For example, if X = 45% is determined and the temperature in the second reactor is 800°C, a pressure of 2.0 MPaG or less can be determined as the pressure in the second reactor since it can be seen from Table 4 that the equilibrium conversion rate of methane at 800°C and 2.0 MPaG is 45.8%.

[Table 4]

| Pressure [MPaG] | Equilibrium conversion rate of methane [%] | | |
|---|---|---|---|
| | 700°C | 800°C | 900°C |
| 0 | 81.3 | 92.0 | 96.4 |
| 0.1 | 70.4 | 85.7 | 93.2 |
| 0.2 | 63.0 | 80.6 | 90.3 |
| 0.3 | 57.5 | 76.3 | 87.7 |
| 0.5 | 49.8 | 69.4 | 83.0 |
| 0.9 | 40.6 | 59.8 | 75.6 |
| 1.0 | 39.0 | 58.0 | 74.0 |

(continued)

| Pressure [MPaG] | Equilibrium conversion rate of methane [%] | | |
|---|---|---|---|
| | 700°C | 800°C | 900°C |
| 2.0 | 29.3 | 45.8 | 62.3 |
| 3.0 | 24.5 | 39.1 | 54.8 |

Second Embodiment

Next, a direct cracking method of a hydrocarbon according to Embodiment 2 of the present disclosure will be described. The direct cracking method of a hydrocarbon according to Embodiment 2 is different from that of Embodiment 1 in that the flow of the catalyst 4 and the flow of the feedstock gas in the device 1 are reversed. In the second embodiment, the same components as those of the first embodiment are denoted by the same reference signs, and detailed description thereof will be omitted.

<Configuration of device for performing direct cracking method of hydrocarbon according to Embodiment 2 of the present disclosure>

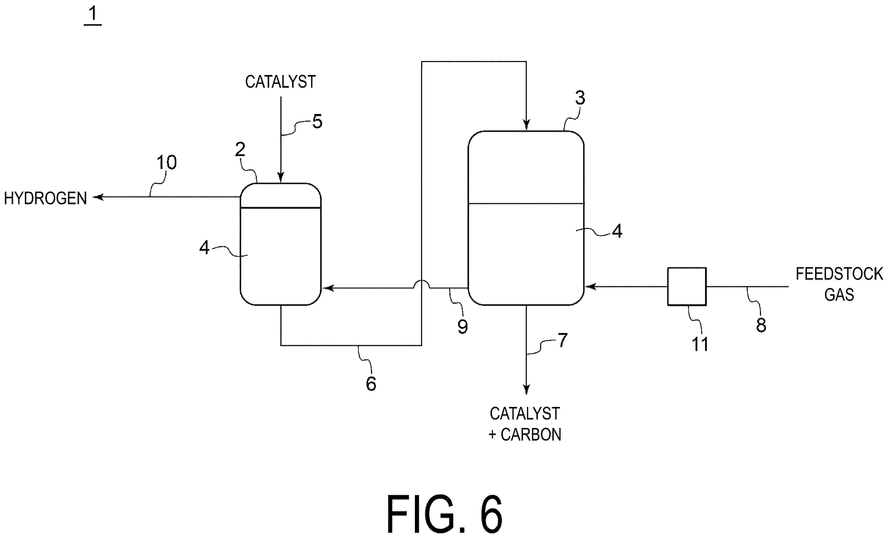

FIG. 6 illustrates a configuration of a device 1 for performing a direct cracking method of a hydrocarbon according to Embodiment 2 of the present disclosure. The device 1 includes a gas supply line 8 that supplies a feedstock gas to a second reactor 3, a gas transfer line 9 that supplies the feedstock gas flowing out of the second reactor 3 to the first reactor 2, and a gas outflow line 10 through which the outflow gas flowing out of the first reactor 2 flows. The other configurations are the same as those of Embodiment 1 except that the compressor 12 is not provided in the gas transfer line 9 and that the gas recycle line 13 (see FIG. 1) and the gas separator 14 (see FIG. 1) do not need to be provided.

<Direct cracking method of hydrocarbon according to Embodiment 2 of the present disclosure>

In the device 1, the feedstock gas is continuously supplied to the second reactor 3 through the gas supply line 8. The feedstock gas flowing into the second reactor 3 stays in the second reactor 3 for a previously designed residence time and then sequentially flows out of the second reactor 3. The feedstock gas flowing out of the second reactor 3 continuously flows into the first reactor 2 via the gas transfer line 9. The feedstock gas flowing into the first reactor 2 also stays in the first reactor 2 for a previously designed residence time, and then sequentially flows out of the first reactor 2 via the gas outflow line 10. The flow of the catalyst 4 is the same as that in Embodiment 1.

<Effects of direct cracking method of hydrocarbon according to Embodiment 2 of the present disclosure>

Also in Embodiment 2, the pretreatment of the catalyst 4 is mainly performed in the first reactor 2, and the direct cracking of a hydrocarbon is mainly performed in the second reactor 3, which is the same as in Embodiment 1. Thus, also in Embodiment 2, as in Embodiment 1, the total volume of the first reactor 2 and the second reactor 3 can be reduced, so that the hydrocarbon can be directly cracked at a suitable cost.

In Embodiment 2, the flow direction of the feedstock gas is opposite to that in Embodiment 1. That is, in Embodiment 2, the feedstock gas passes through the first reactor 2 after passing through the second reactor 3. In the case of this configuration, since the direct cracking of the hydrocarbon is performed in the second reactor 3, the gas flowing out from the second reactor 3 contains hydrogen. Therefore, since hydrogen flows into the first reactor 2, the pretreatment of the catalyst 4 is performed in the presence of hydrogen. The effects of performing the pretreatment of the catalyst 4 in the presence of hydrogen will be examined below.

Experiments of Examples and Comparative Examples were performed by using the experimental device 20 presented in FIG. 2. In both experiments, the pretreatment of the catalyst 4 was performed for 10 hours, then the conditions were changed, and the direct cracking reaction was performed for 10 hours using the pretreated catalyst 4. The conditions of the pretreatment and the direct cracking reaction are the same as those in Table 1. However, the composition (volume ratio of methane / hydrogen) of the gas supplied to the reactor in the pretreatment was 50/50 in Examples, whereas the composition was 100/0 in Comparative Examples. That is, the catalyst 4 is pretreated in the presence of hydrogen in Examples, and the catalyst 4 is pretreated only with methane in Comparative Examples.

The peak value of the methane conversion rate during the direct cracking reaction was 38.9% in Examples and 27.7% in Comparative Examples. From this result, it can be said that the pretreatment of the catalyst in the presence of hydrogen improves the conversion rate of a hydrocarbon in the direct cracking reaction. Thus, in the hydrocarbon cracking reaction according to Embodiment 2, hydrogen is contained in the gas flowing out of the second reactor 3, and the gas flowing out of the second reactor 3 is supplied to the first reactor 2, whereby the catalyst 4 is pretreated in the presence of hydrogen in the first reactor 2, so that the hydrocarbon during the direct cracking reaction also has a higher peak value of the conversion rate as compared with Embodiment 1. As a result, the conversion rate of the hydrocarbon can be improved.

<Modifications of Embodiments 1 and 2>

In Embodiments 1 and 2, the hydrocarbon is directly cracked using the unsupported catalyst of the aggregate of a plurality of metallic particles having an iron purity of 86% or more, but the present invention is not limited to this catalyst. A catalyst having any configuration may be used as long as the catalyst contains iron as a catalyst component, and for example, a supported catalyst in which iron as a catalyst component is supported on a carrier may be used.
The contents described in the above embodiments are understood as follows, for example.
[1] A direct cracking method of a hydrocarbon according to one aspect is a direct cracking method of a hydrocarbon for directly cracking a hydrocarbon into carbon and hydrogen in each of a first reactor (2) and a second reactor (3), the method including:

a step of continuously flowing a catalyst (4) containing iron as a catalyst component through the first reactor (2) and then flowing the catalyst through the second reactor (3); and
a step of continuously flowing a feedstock gas containing a hydrocarbon through one of the first reactor (2) or the second reactor (3) and then flowing the feedstock gas through the other of the first reactor (2) or the second reactor (3),
the feedstock gas and the catalyst (4) coming into contact with each other in each of the first reactor (2) and the second reactor (3) under a condition that a pressure in the second reactor (3) is higher than a pressure in the first reactor (2).
According to the direct cracking method of a hydrocarbon of the present disclosure, where a catalyst is pretreated in a first reactor, and then a hydrocarbon is directly cracked in a second reactor having an internal pressure higher than the internal pressure of the first reactor, a total volume of the first reactor and the second reactor can be reduced as compared with a case where pretreating a catalyst and directly cracking a hydrocarbon are performed in one reactor, and thus the hydrocarbon can be directly cracked at a suitable cost.

[2] A direct cracking method of a hydrocarbon according to another aspect is the direct cracking method of a hydrocarbon according to [1], wherein the catalyst is an unsupported catalyst including an aggregate of a plurality of metallic particles having an iron purity of 86% or more.
According to such a method, when the unsupported catalyst including the aggregate of a plurality of metallic particles having an iron purity of 86% or more is used, the hydrocarbon can be directly cracked at a suitable cost.
[3] A direct cracking method of a hydrocarbon according to still another aspect is the direct cracking method of a hydrocarbon according to [1] or [2], wherein when an atmospheric pressure is defined as $P_0$ kPa, the pressure in the first reactor (2) is from $P_0$ kPa to $(P_0 + 50)$ kPa, and the pressure in the second reactor (3) is 3 MPa or less.
According to such a method, since the activity of the direct cracking reaction of a hydrocarbon in the second reactor can be increased, the hydrocarbon can be directly cracked at a suitable cost.
[4] A direct cracking method of a hydrocarbon according to another aspect is the direct cracking method of a hydrocarbon according to [3],
wherein the pressure in the second reactor (3) is determined by a step of: determining a desired value X (%) for a conversion rate of methane in the second reactor (3); a step of obtaining an equilibrium conversion rate Y (%) of methane at a temperature in the second reactor (3); and a step of determining the pressure in the second reactor (3) under conditions that $X \leq Y$.
According to such a method, the pressure in the second reactor can be easily and suitably determined.
[5] A direct cracking method of a hydrocarbon according to still another aspect is the direct cracking method of a hydrocarbon according to any one of [1] to [4], wherein, in each of the first reactor (2) and the second reactor (3), the feedstock gas and the catalyst (4) come into contact with each other in a temperature ranging from 600°C to 900°C.
According to such a method, the activity of the direct cracking reaction of a hydrocarbon can be maintained for a long time.
[6] A direct cracking method of a hydrocarbon according to still another aspect is the direct cracking method of a hydrocarbon according to any of [1] to [5], the method including:
a step of supplying a part of an outflow gas flowing out of the second reactor (3) to the first reactor (2).
According to such a method, unreacted hydrocarbon is directly cracked again, so that the yield of hydrogen can be improved.

[7] A direct cracking method of a hydrocarbon according to still another aspect is the direct cracking method of a hydrocarbon according to [6], the method including:

a step of separating the outflow gas into a hydrocarbon and hydrogen before the step of supplying the part of the outflow gas to the first reactor (2),
wherein the hydrocarbon-containing gas separated from the outflow gas is supplied to the first reactor (2).
According to such a method, since only unreacted hydrocarbon is directly cracked again, the purity of recovered hydrogen can be increased, and the yield of hydrogen can be improved.

[8] A direct cracking method of a hydrocarbon according to still another aspect is the direct cracking method of a hydrocarbon according to any one of [1] to [5], wherein the feedstock gas is continuously flown in the second reactor (3) and then flown in the first reactor (2).
According to such a method, hydrogen is contained in the gas flowing out of the second reactor, and the gas flowing out of the second reactor is supplied to the first reactor, whereby the catalyst is pretreated in the presence of hydrogen in the first reactor, so that the conversion rate of hydrocarbon can be improved.

Reference Signs List

2    First reactor
3    Second reactor
4    Catalyst

**Claims**

1. A direct cracking method of a hydrocarbon for directly cracking a hydrocarbon into carbon and hydrogen in each of a first reactor and a second reactor, the method comprising:

a step of continuously flowing a catalyst containing iron as a catalyst component through the first reactor and then flowing the catalyst through the second reactor; and
a step of continuously flowing a feedstock gas containing a hydrocarbon through one of the first reactor or the second reactor and then flowing the feedstock gas through the other of the first reactor or the second reactor, the feedstock gas and the catalyst coming into contact with each other in each of the first reactor and the second reactor under a condition that a pressure in the second reactor is higher than a pressure in the first reactor.

2. The direct cracking method of a hydrocarbon according to claim 1, wherein the catalyst is an unsupported catalyst comprising an aggregate of a plurality of metallic particles having an iron purity of 86% or more.

3. The direct cracking method of a hydrocarbon according to claim 1 or 2, wherein, when an atmospheric pressure is defined as $P_0$ kPa, the pressure in the first reactor is from $P_0$ kPa to $(P_0 + 50)$ kPa, and the pressure in the second reactor is 3 MPa or less.

4. The direct cracking method of a hydrocarbon according to claim 3, wherein the pressure in the second reactor is determined by:

a step of determining a desired value X (%) for a conversion rate of methane in the second reactor;
a step of obtaining an equilibrium conversion rate Y (%) of methane at a temperature in the second reactor; and
a step of determining the pressure in the second reactor under conditions that $X \leq Y$.

5. The direct cracking method of a hydrocarbon according to claim 1 or 2, wherein, in each of the first reactor and the second reactor, the feedstock gas and the catalyst come into contact with each other in a temperature ranging from 600°C to 900°C.

6. The direct cracking method of a hydrocarbon according to claim 1 or 2, further comprising a step of supplying a part of an outflow gas flowing out of the second reactor to the first reactor.

7. The direct cracking method of a hydrocarbon according to claim 6, further comprising:

   a step of separating the outflow gas into a hydrocarbon and hydrogen before the step of supplying the part of the outflow gas to the first reactor,
   wherein the hydrocarbon-containing gas separated from the outflow gas is supplied to the first reactor.

8. The direct cracking method of a hydrocarbon according to claim 1 or 2, wherein the feedstock gas is continuously flown in the second reactor and then flown in the first reactor.

FIG. 1

20

26

27

23

24

4

28

25

METHANE

ARGON

# FIG. 2

METHANE
CONVERSION    45
RATE [%]

0          10          20          30

TIME (hr)

FIG. 3

METHANE CONVERSION RATE: 45%

REACTOR

CATALYST
1. 85 m³/hr

METHANE
11111 Nm³/hr

CATALYST RESIDENCE
TIME
20 hr

UNREACTED METHANE 6111 Nm³/hr

HYDROGEN PRODUCTION AMOUNT: 10000 Nm³/hr

CATALYST 1.85 m³/hr
CARBON 159 m³/hr

# FIG. 4

EP 4 474 343 A1

FIG. 5

FIG. 6

EP 4 474 343 A1

## INTERNATIONAL SEARCH REPORT

International application No.

**PCT/JP2023/007941**

### A. CLASSIFICATION OF SUBJECT MATTER

*C01B 3/26*(2006.01)i; *C01B 32/05*(2017.01)i; *B01J 23/745*(2006.01)i
FI: C01B3/26; B01J23/745 M; C01B32/05

According to International Patent Classification (IPC) or to both national classification and IPC

### B. FIELDS SEARCHED

Minimum documentation searched (classification system followed by classification symbols)

C01B3/26; C01B32/05; B01J23/745

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-9048 A (HAZER GROUP LTD.) 14 January 2022 (2022-01-14) claims, paragraphs [0074]-[0087], [0097]-[0105], example 2, fig. 1, 3, 7, 8A | 1, 3-8 |
| A | | 2 |
| A | JP 2012-236727 A (JAPAN STEEL WORKS LTD.) 06 December 2012 (2012-12-06) fig. 3 | 1-8 |
| A | JP 2013-095616 A (KASSUI PLANT KK) 20 May 2013 (2013-05-20) paragraph [0062] | 2 |
| A | JP 2007-527348 A (STATOIL ASA) 27 September 2007 (2007-09-27) claims | 2 |
| A | JP 2001-354405 A (KAWASAKI JUKOGYO KABUSHIKI KAISHA) 25 December 2001 (2001-12-25) entire text | 1-8 |
| P, A | JP 2022-104521 A (MITSUBISHI HEAVY INDUSTRIES, LTD.) 08 July 2022 (2022-07-08) entire text | 2 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| | International application No. |
|---|---|
| | **PCT/JP2023/007941** |

| Patent document cited in search report | | | Publication date (day/month/year) | Patent family member(s) | | | Publication date (day/month/year) |
|---|---|---|---|---|---|---|---|
| JP | 2022-9048 | A | 14 January 2022 | JP 2018-516839 A<br>claims, paragraphs [0074]-[0087], [0097]-[0105], example 2, fig. 1, 3, 7, 8A<br>US 2018/0065850 A1<br>claims, paragraphs [0127]-[0136], [0146]-[0154], example 2, fig. 1, 3, 7, 8A<br>WO 2016/154666 A1<br>EP 3277623 A1<br>KR 10-2018-0002619 A<br>CN 108064214 A | | | |
| JP | 2012-236727 | A | 06 December 2012 | US 2014/0086820 A1<br>fig. 3<br>US 2015/0158001 A1<br>fig. 3<br>WO 2012/153810 A1<br>EP 2708507 A1<br>CN 103534203 A | | | |
| JP | 2013-095616 | A | 20 May 2013 | (Family: none) | | | |
| JP | 2007-527348 | A | 27 September 2007 | US 2007/0215520 A1<br>claims<br>WO 2005/054124 A1<br>EP 1995360 A2<br>CN 1886335 A<br>KR 10-2007-0017302 A | | | |
| JP | 2001-354405 | A | 25 December 2001 | (Family: none) | | | |
| JP | 2022-104521 | A | 08 July 2022 | WO 2022/145277 A1<br>KR 10-2022-0094149 A<br>TW 202231573 A | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022037899 A
- JP 2021153622 A
- JP 4697941 B
- JP 7089235 B